# EUROPEAN PATENT SPECIFICATION

(11) **EP 3 912 715 B1**
(45) Date of publication and mention of the grant of the patent: **09.11.2022**
(21) Application number: 21173439.7
(22) Date of filing: 11.05.2021
(51) Int. Cl.: B01J 2/14, B01J 2/18, B29B 9/08

(54) **MATERIAL PREPARATION METHOD FOR INJECTION MOULDING, EXTRUSION AND/OR THERMOFORMING**
VERFAHREN ZUR MATERIALZUBEREITUNG FÜR SPRITZGIESSEN, EXTRUSION ODER THERMOFORMEN
PROCÉDÉ DE PREPARATION D'MATERIAU UTILISABLE POUR MOULAGE PAR INJECTION, EXTRUSION OU THERMOFORMAGE

(30) Priority: 15.05.2020 CZ 20200274
(43) Date of publication of application: 24.11.2021
(73) Proprietor: Refork SE, 11000 Praha 1 (CZ)
(72) Inventor: Faltus, Milos, 160 00 Praha 6 (CZ); Proksan, Zbynek, 15200 Praha 5 (CZ)
(74) Representative: Pavlica, Tomas

(56) References cited:
- EP-A1- 3 260 115
- US-A1- 2012 052 298
- US-A1- 2016 135 449
- US-A1- 2017 298 211

## Description

### FIELD OF THE INVENTION

The invention relates to a material preparation method for injection moulding, extrusion and/or thermoforming performed, particularly preferably, in a single technological operation, i.e. in one technological step, where a composite material suitable as a semi-finished product used in injection moulding, extrusion and thermoforming is prepared from an input raw material. Related prior art is US 2012/052298, EP 3260115, US 2017/298211 and US 2016/135449.

### BACKGROUND OF THE INVENTION

At present, the input raw materials for the production of lignocellulosic material-based composite materials, thermoplastics, functional inorganic fillers, and conventional fillers for injection moulding are processed by compounding these materials with a proportion of thermoplastics usually higher than 60%. For the production by an extrusion process, the above-mentioned raw materials are prepared in a similar manner with a lower proportion of thermoplastics. A similar method of preparation is used for thermoforming as well.

The lignocellulosic materials and, possibly, also other components are treated to the desired input dry matter (more than 98% is required for injection moulding) only by drying in conventional dryers to the required humidity. For the purposes of this patent application, lignocellulosic materials mean natural materials containing cellulose and/or lignin. The lignocellulosic materials are also pre-treated chemically or thermally to improve their adhesion to thermoplastics. Currently, wood sawdust of an input grain size of up to 0.75 mm and of very low humidity is used as the basic lignocellulosic material for the above-described productions, i.e. injection moulding, extrusion and thermoforming. This sawdust is mixed together with powdered or granular thermoplastics, dyes, or other additives in mixers. The resulting mixtures are compounded on compounding lines. The granules discharged from the compounding lines are usually cooled in a water bath, then dried and only after these operations, they are used for injection moulding, extrusion or thermoforming into the shape of the desired products. The primary input raw materials and, in the case of biodegradable or compostable products, also very expensive biodegradable thermoplastics are still used for the production of these materials. The disadvantage is the need to prepare wood sawdust of a maximum grain size of 0.75 mm and of very low humidity, which is highly energy-intensive.

### SUMMARY OF THE INVENTION

According to a first aspect of the invention, it is possible to prepare a material suitable for injection moulding, extrusion and/or thermoforming from a thermoplastic-containing mixture due to the fact that when a repeated, at least double, sufficiently strong mechanical force pulse is given to the particles of this mixture the particles are degraded to smaller ones as well as the temperature in the particle centre is increased so that the thermoplastic starts to melt and combine with other mixture particles, wherein if the particles are vortexed, at least during the repeated mechanical force pulse is being given, the mixture particles are mixed and then they fit the use mentioned above. The described mechanical force pulse can be given to the particles by both impact and pulse due to a sufficiently rapid increase and subsequent decrease in pressure, or combination thereof. According to another aspect, the thermoplastic precursor instead thereof is possible to be used because it is converted into the thermoplastic by the described treatment.
Thus, according to the present invention, the method of preparing a material suitable for injection moulding, extrusion and/or thermoforming is provided, where at least one thermoplastic is mixed with another material, wherein the method principle consists in forming a mixture of particles of at least one substance from the first group, comprising thermoplastics and the precursors thereof with a particle size of up to 8 mm, with at least one substance from the second group, comprising lignocellulosic substances with a particle size of up to 35 mm and inorganic substances with a particle size of up to 15 mm, wherein the dry matter ratio of substances of the first group to the total dry matter of substances of the second group is from 0.1 to 3, while the mutual ratio of dry matter of lignocellulosic substances and dry matter of inorganic substances from the second group ranges from 0 to 10, the total input moisture of the mixture being at most 70% of the total weight of the mixture; this mixture is fed together with the propellant gas, particularly preferably air, in an amount of 0.4 m³ of the propellant gas per kg of the mixture to 1.5 m³ of the propellant gas per kg of the mixture to the centre of a working area arranged between two coaxial circular plates within a mechanical-thermal integrator, which are provided with mechanical force pulse means to the mixture particles, wherein the two circular plates of the mechanical-thermal integrator rotate against each other, the mechanical force pulse means on each rotating plate impact at least twice in succession with each particle (grain), the first mechanical force pulse given to the particles being effected by collision of the particle with the mechanical force pulse means moving at a speed of at least 40 m·s⁻¹ and each subsequent mechanical force pulse to the particles takes place at least at the same intensity of mechanical force pulse compared to the previous pulse, heating and separating the particles in the mixture of treated material by mechanical pulse, and the collisions between particles of substances from the first group and that ones from the second group provide mixture homogenization to form a fine-grained agglomerate of particles of mixture material with a moisture content of up to 2%. The said range of the propellant gas/mixture ratio from 0.4 m³of the propellant gas per kg of the mixture to 1.5 m³ of the propellant gas per kg is important for the mixture preparation method according to the invention, because when the amount of propellant gas is higher than 1.5 m³ per kg of mixture, there is insufficient interaction between the tools and the mixture particles due to the resulting flow of propellant gas with the mixture; therefore, the mixture particles largely "avoid" the mechanical force pulse means and the necessary collisions do not occur. When the amount of propellant gas is lower than 0.4 m³per kg of the mixture the mixture compression among the mechanical force pulse means is not sufficient, therefore, the preparation method is low effective or ineffective. According to a preferred embodiment of the method according to the invention, the pressure of the propellant gas with the mixture of materials to be treated is increased at least 2-fold, but not more than 100-fold at one go in a time interval of less than 0.005 s after at least a double impact, and subsequently it decreases again.

As already mentioned, for the purposes of this patent application, the lignocellulosic materials mean not only materials containing cellulose and lignin but also materials containing only cellulose or only lignin. Particularly preferably, the lignocellulosic material used to perform the method according to the invention is in particular wood material (chips, sawdust) but also plant material such as glume, bran, straw, hay and other plant stems, etc. For the purposes of this patent application, a mechanical-thermal integrator means a device used to perform the treatment method according to the invention, where the mechanical energy is transferred to the individual particles of the substances to be treated. However, when performing the method according to the invention, within the mechanical-thermal integrator, the mechanical energy is also transferred to the particles of the treated substances when particles of treated materials colliding with the surface of circular plates or in mutual collisions of particles after at least one of the colliding particles has been accelerated before this collision by the mechanical force pulse means in the mechanical-thermal integrator. For the purposes of this patent application, a mechanical pulse means, in particular, the impact of this means with the particle, however, it means also a possible sudden increase in the pressure of the propellant gas with the particles with subsequent decrease, thereby actually mechanically acting on the particles substantially as if the mechanical force pulse means hits the particle. As a result of the described mechanical force pulse given to the particles, the particles separate and subsequently disintegrate into smaller particles, as well as their they are activated mechanically, creating a network of internal defects within the particles, and highly fragmented and electrically charged so-called active particle surfaces. In the mechanical-thermal integrator, there are also repeated compression of the particles, mutual friction of the particles, and the creation of the particle defects. As a result of the above, the mixture particles to be treated are heated and, in the case of thermoplastic particles, softened. In this way, the treated material is heated "from the inside" and, thereby, water partially evaporates and is significantly expelled from the lignocellulosic material, if present in the mixture, and, simultaneously, this material is activated. Particularly preferably, the mixture of separated, activated and plasticized material in the mixture with the propellant gas, which is also preferably partially heated, is subjected to very rapid and intense compression and subsequent expansion, which is caused by the passage of another mechanical force pulse means around the particles as they travelled in the mechanical-thermal integrator from the centre to the perimeter thereof. The mechanical force pulse means to the particles have, for example, a triangular, parallelogram or trapezoidal cross-section in a plane parallel to the rotor plane, are arranged, for example, as convergent and/or convergently divergent nozzles on one rotor, against which the mechanical force pulse means having, for example, a trapezoidal or triangular cross-section in a plane parallel to the plane of the rotor and arranged on the other rotor move, and which repeatedly close and open the passage of the mixture through the nozzle. Since the mechanical force pulse means, located on different rotating plates, which are opposite to each other or rotate in the opposite direction, rotate at a high mutual speed, usually higher than 80 m·s⁻¹ but more often also approximately 200 m·s⁻¹ and more, the said nozzles, formed by the mechanical force pulse means, usually have a length of the first tens of mm, this change in pressure takes place in a very short time interval, usually in the range of 0.001 s to 0.005 s, particularly preferably less than 0.003 s, e.g. only 0.002 s or even 0.001 s. Simultaneously with this change in pressure, further collisions of the mixture particles occur with the mechanical force pulse means and with one another. Especially in the phase of pressure drop, the chaotic stochastic movement of the material particles causes intense turbulent flow generated behind the fast moving mechanical force pulse means, so there is an interaction among these particles, and subsequently they integrate into agglomerates under shock compression of the mixture of treated substances and propellant gas. The effects of rapid compression, expansion and turbulent flow are particularly preferably achieved by a combination of respective mechanical force pulse means, which are preferably formed, for example, similarly to accelerating and braking blades in a compressor, wherein the mechanical force pulse means functioning as the accelerating blades are arranged on one rotor while these ones functioning as the braking blades are arranged on the second rotor, which rotates in the opposite direction relative to the first rotor.
Preferably, when performing the material preparation method for injection moulding, extrusion and/or thermoforming according to the invention, a substance from a group of phyllosilicates and mixtures thereof are added to the mixture fed to the mechanical-thermal integrator in an amount of from 2% by weight to 25% by weight, based on the total weight of the mixture. This substance acts as an active micro filler to reduce the viscosity of the resulting agglomerate and improve processability thereof in the subsequent production of products by injection moulding, extrusion or thermoforming. Preferably, the substance from the group of phyllosilicates is montmorillonite and/or a mixture of phyllosilicates containing at least 50% by weight of montmorillonite.

Thermoplastics usable when performing the method of the present invention preferably include thermoplastic starches, polylactic acid (PLA), polyhydroxyalkanoate (PHA), polyhydroxybutyrate (PHB), polyhydroxybutyrate-valerate (PHBV), polycaprolactone (PCL), polybutylene succinate (PBS), maleic anhydride, grafting with maleic anhydride MAH-g, unmodified and chemically modified humic acids, and mixtures thereof. The thermoplastic precursor usable in the present invention is preferably a mixture containing at least 30% by weight of unmodified starch and water and/or OH-moiety-containing substances and/or COOH-moiety-containing substances.

According to one preferred embodiment of the method according to the invention, water is added to the mixture of materials before and/or during their treatment in an amount of up to 40% of the total dry weight of the treated materials. This is due to the fact, the water evaporation from the mixture during the heating of the mixture particles in the treatment method according to the invention controls the temperature of the output agglomerate, wherein the higher water content decreases the temperature.

According to a further preferred embodiment of the method according to the invention, regulating the amount of propellant gas entering the mechanical-thermal integrator in the above-mentioned range of 0.4 m³ of the propellant gas per kg of the mixture to 1.5 m³ of the propellant gas per kg of the mixture, may control the grain size of the output agglomerate, wherein the lower flow rate causes larger grains of agglomerated material and vice versa.

According to yet another preferred embodiment of the method according to the invention, solid and/or liquid additives from the group of substances comprising gelatine, glutin, pectin and gluten, and/or mixtures thereof are added to the mixture of materials fed to the mechanical-thermal integrator in an amount of from 5% to 35%, by weight, in order to improve the rheological properties of the resulting agglomerate during subsequent processing into products by injection moulding, extrusion and/or thermoforming and improve their biodegradability.

According to yet another preferred embodiment of the method according to the invention, a substance from the group of oxides, hydroxides, organic and/or inorganic salts of alkali metals and/or alkaline earth metals and/or mixtures and/or solutions thereof is further added to the mixture of input materials in amounts of from 0.1 to 25% by weight, based on the dry weight of the input materials, as plasticizers improving the rheological properties of the mixture during processing thereof and, at the same time, as precursors of substances enabling efficient decomposition of products, formed by injection moulding, extrusion and/or thermoforming of the resulting agglomerate, in water.

According to yet another preferred embodiment of the method according to the invention, solid or liquid dyes are added to the mixture of input materials to influence the colour of the resulting material.

According to a further preferred embodiment of the method according to the invention, at least one of the substances of the mixture treated in the mechanical-thermal integrator is preheated to at least 50 °C before implementing into the mechanical-thermal integrator. On the one hand, this preheating supports removal of water from the material during the method of the invention, especially if the content thereof is higher. Furthermore, when a thermoplastic precursor is used, the conversion of this precursor to a thermoplastic takes place faster and more efficiently with less energy input due to the above-mentioned heating of at least one substance to at least 50 °C.

According to yet another preferred embodiment of the method according to the invention, the agglomerated material formed by applying one of the embodiments of the preparation method according to the invention described elsewhere in this patent application can be further treated by re-treatment thereof as the input material by repeated introduction into the mechanical-thermal integrator, wherein a substance from the group of lignocellulosic materials having an input grain size not exceeding 5 mm and a moisture content not exceeding 30% by weight and/or a substance from the group of inorganic materials having an input grain size not exceeding 5 mm and an input weight not exceeding 25% by weight is added thereto. Particularly preferably, solid and/or liquid additives from the group of substances comprising gelatine, glutin, pectin, gluten, organic and inorganic salts of alkali metals and alkaline earth metals and mixtures thereof and/or solutions thereof are further added during its preparation in amounts of from 0.1 to 30% by weight, based on the dry weight of the material fed to the agglomeration. During this repeated treatment of the material already treated by the method according to the invention, this material is possible to be introduced into a different mechanical-thermal integrator than the one used under the first treatment.

The mechanical force pulse means installed on the counter-rotating circular plates of the mechanical-thermal integrator transmit energy to the particles of the treated substances through a mechanical impact when the particles of the incoming material collide with the bodies giving a mechanical force pulse. Even a first mechanical force pulse given to a particle of, in particular, the lignocellulosic materials, if present in the mixture, usually disrupts the structure thereof and partially disrupts the bond between the lignin component and the cellulose component. At the same time, the thermoplastic particles are heated and plasticized to overcome the Van der Waals forces acting between the molecules thereof and, in the presence of inorganic substances, to separate their particles. The group of thermoplastic materials is very wide and thermoplastics are usually the most expensive component of the mixtures. According to one particularly preferred embodiment of the method according to the invention, at least one inorganic, water-insoluble substance is added to the thermoplastic and/or the precursor thereof; optionally at least one inorganic, water-insoluble substance is also added to the mixture of at least one thermoplastic and/or the precursor thereof with at least one lignocellulosic substance. According to one aspect, at least one inorganic, water-insoluble substance is used in the method of the invention as a conventional filler in order to make the resulting agglomerated mixture used for injection moulding, extrusion and/or thermoforming cheaper. Such an inorganic, water-insoluble substance is particularly preferably limestone and/or silicon dioxide. However, in another aspect, according to one particularly preferred embodiment of the method of the present invention, at least one inorganic, water-insoluble substance to be added is used as a functional filler affecting the processing operation itself or having a significant effect on post-processing in injection moulding, extrusion or thermoforming processes, wherein makes them more efficient. Such inorganic, water-insoluble substances used as a functional filler are phyllosilicates, i.e. silicates having a layered structure and the presence of OH moiety in the spaces between the layers of SiO₂ tetrahedrons and Al₂O₃ octahedrons; talc, muscovite and/or kaolinite are particularly preferably used. According to a particularly preferred embodiment of the method of the invention, the phyllosilicate used is montmorillonite phyllosilicate and/or substances containing a substantial proportion of this mineral, for example, bentonite, or other types of so-called smectites.

According to one particularly preferable embodiment of the method of the invention, the agglomerate obtained, which is in a semi-solid or partially plastic state before cooling, is formed into a desired shape of resulting grains and dimensions (e.g. into pellets or granules further used for injection moulding, extrusion or thermoforming) with minimal energy requirements.

The material preparation method according to the present invention makes it possible to significantly extend the range of input raw materials usable for the preparation of semi-finished products for the production of products by injection moulding, extrusion and thermoforming. The method according to the invention makes it possible to process input materials with higher input moisture, higher grain size; for example, for lignocellulosic materials, it also allows to process some waste materials, such as untreated and non-dried sawdust, wood chips, plant stems, waste from paper production, waste paper including cartons, etc. Furthermore, the solution makes it possible to reduce the amount of thermoplastic used and particularly preferably makes it possible to partially or even completely replace selected biodegradable thermoplastics (modified starches) with the precursors thereof. The advantage of the present invention is that it simplifies, shortens and reduces the cost of the whole process of preparing the semi-finished products. The method described in this patent application allows, in contrast to the previously used, the input of any number of components, even with relatively high humidity, the possibility of adding solid and liquid additives and dyes, and the like.

### BRIEF EXPLANATION OF DRAWINGS

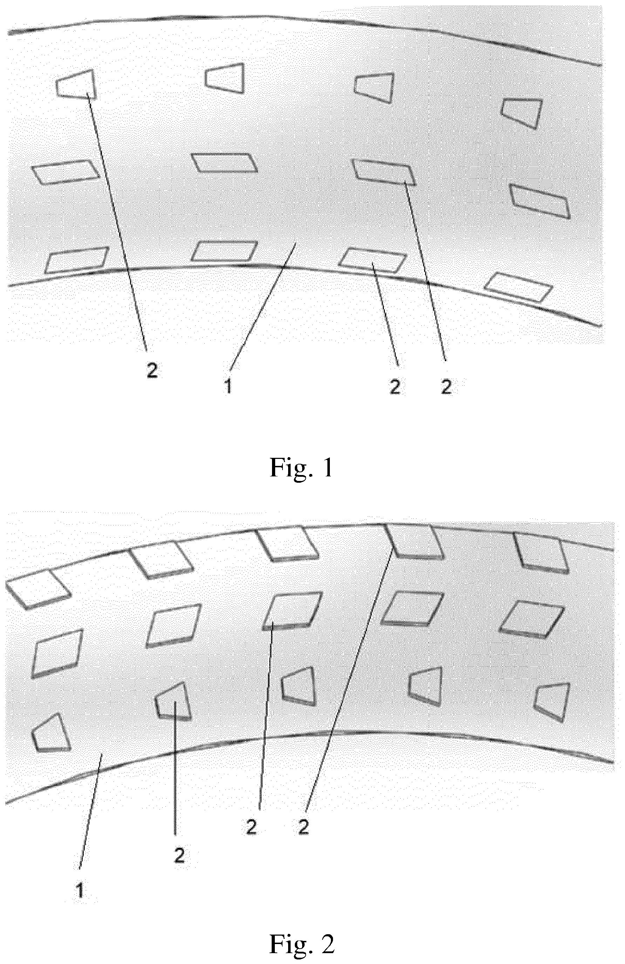

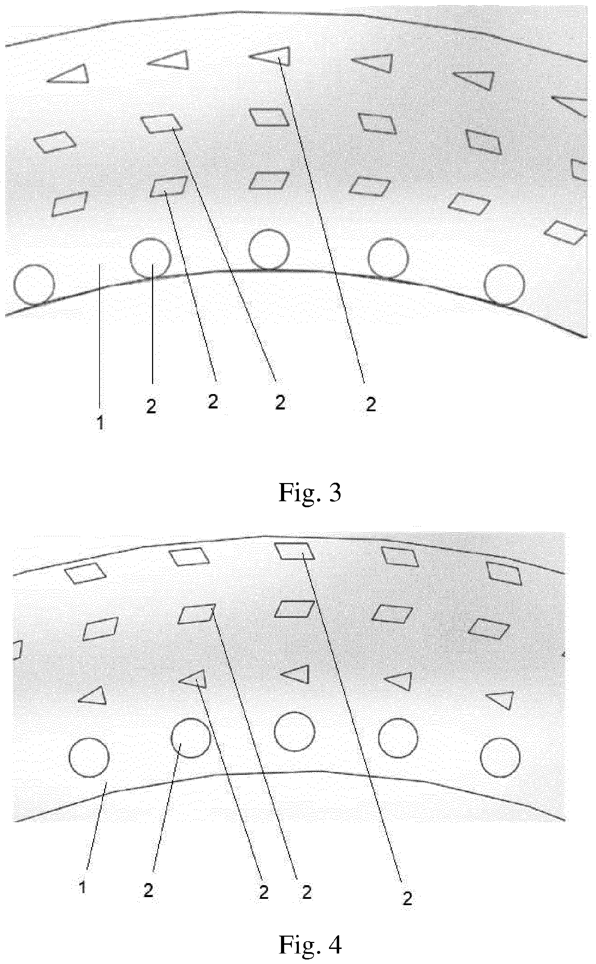

Figures 1 to 6 show examples of the arrangement of the means giving a mechanical pulse on a section of a rotor of a mechanical-thermal integrator used to perform the method according to the invention.

### DESCRIPTION OF THE INVENTION

The present invention will be described by way of specific embodiments and with reference to certain drawings, however, the invention is not limited thereby but only by the claims. The described drawings are only schematic and are not to be construed as limiting. In the drawings, the size of some elements may be overstated and they may not be drawn to scale for illustrative reasons. The dimensions in the drawings may not correspond to the actual dimensions and serve to explain the invention. Furthermore, the terms first, second and similar terms in the description and in the patent claims are used to distinguish between similar elements and they are not necessary to be a description of succession or temporality or space, superiority, or otherwise. It is to be understood that the terms used in such way are interchangeable under certain circumstances and that embodiments of the invention as described herein are capable of performance in sequences other than those described or shown herein. In addition, the terms above, below, first, second, and the like used in the description and patent claims are used for descriptive purposes and do not necessarily describe their desired situation. It is to be understood that the terms used in such way are interchangeable under certain circumstances and that embodiments of the invention as described herein are capable of operation in other orientations than those described or illustrated herein. It should also be noted that the term "comprising/including" as used in the patent claims is not to be construed as limiting the claim solely to the features specified behind it; therefore, other elements or steps are not excluded. Therefore, it is to be construed as indicating the presented property, unit, steps or component to which it refers, but does not exclude the presence or supply of one or more other properties, units, steps or components, or groups thereof.

### Example 1

The substance from the first group is a granular thermoplastic PET having a particle size of up to 5 mm, which is mixed in an amount of 40 parts by weight with a substance from the second group, being wood sawdust having an average input particle size of 3 mm and an input moisture of 20% by weight, in an amount of 60 parts; and this mixture is fed together with air as the propellant gas in an amount of about 0.4 m³ per kg of the mixture to the mechanical-thermal integrator where the particles are given with repeated (i.e. at least double) mechanical force pulse. The repeated mechanical force pulse is given to the mixture particles by two rotors of the mechanical-thermal integrator rotating against each other. The mixture is fed between two counter-rotating coaxial rotors 1, each having a diameter of 800 mm and a peripheral speed of 110 m/s. The mixture is fed to an area near the centre of the rotation thereof. On the first one of the rotors 1 (Fig. 1) of this mechanical-thermal integrator, there are two circular rows of means 2 giving a mechanical force pulse in the form of prisms with a parallelogram cross-section, wherein thirty means 2 giving a mechanical force pulse are placed in these two rows, the first row having a diameter of 610 mm and the second row having a diameter of 660 mm. The means 2 giving a mechanical force pulse in the first two rows are arranged such that two adjacent ones form a convergent nozzle having the input cross-section width: **d₁** = 40 mm and the output cross-section width: **d₂** = 12 mm and the nozzle length of **L₁** = 40 mm. Forty five means 3 giving a mechanical force pulse having a trapezoidal cross-section, the wider base of which has a length of 10 mm and the shorter base has a length of 6 mm, are arranged in a third row with a diameter of 690 mm. On the opposite (Fig. 2), in the opposite direction rotating, rotor 1 of the mechanical-thermal integrator, there are three circular rows of means 2 giving a mechanical force pulse. In the first row of the means 2 giving a mechanical force pulse of a diameter of 635 mm, there are forty means 2 giving a mechanical force pulse in the form of prisms having a trapezoidal cross-section, larger and shorter base of which has a length of 12 mm and 7 mm, respectively, arranged, wherein the means 2 extend between the first and second rows of the means 2 on the first rotor; in the third row of a diameter of 675 mm, there are sixty means 2 giving a mechanical force pulse in the form of prisms with a parallelogram cross-section arranged; in the second row of a diameter of 710 mm, there are sixty means 2 giving a mechanical force pulse in the form of prisms with a parallelogram cross-section arranged, wherein all the means 2 giving a mechanical force pulse are of a height of 17 mm, while the perpendicular distance of the rotors is 20 mm. As the mixture particles pass between the two rotors 1, the means 2 giving a mechanical force pulse impact with the mixture particles repeatedly as well as force pulses are generated due to the first means of the second rotor 1 passing between the first and second means of the first rotor forming the convergent nozzle, so that when the rotors rotate against each other, the particles hit the means as well as they are compressed in the convergent nozzle and simultaneously processed by the first means of the second rotor. As a result, force pulses occur in the mixture, causing the particles to heat up sharply. This treatment produced PET agglomerates with finely dispersed wood particles, these agglomerates having a size of up to 3 mm, moisture of up to 2% by weight, wherein the temperature of the agglomerate at the output of the mechanical-thermal integrator was 60 °C - 65 °C.

### Example 2

PET thermoplastic granules having a particle size of up to 3 mm in an amount of 25 parts by weight are mixed with wood sawdust having an average input grain size of 3 mm and an input moisture content of 25% by weight in an amount of 50 parts by weight of sawdust, 25 parts by weight of crystalline calcitic limestone having an input particle size of up to 3 mm and an input moisture content of 4% by weight; and this mixture is fed along with air in an amount of 0.7 m³ per kg of the mixture to the mechanical-thermal integrator of Example 1 and subjected to the treatment as described therein. This treatment produced PET agglomerates with finely dispersed wood and calcitic limestone particles, these agglomerates having a size of up to 3 mm, moisture of up to 2% by weight and temperature at the output of the integrator was 50 °C - 55 °C.

### Example 3

PET thermoplastic granules having a particle size of up to 5 mm in an amount of 75 parts by weight are mixed with wood sawdust having an average particle size of 3 mm and an input moisture content of 10% by weight in an amount of 15 parts by weight, 10 parts by weight of crystalline calcitic limestone having an input particle size of up to 3 mm and an input moisture content of 4% by weight; and this mixture is fed along with air in an amount of 0.7 m³ per kg of the mixture to the mechanical-thermal integrator of Example 1 and subjected to the treatment as described therein. This treatment produced PET agglomerates with finely dispersed wood and calcitic limestone particles, these agglomerates having a size of up to 3 mm, moisture of up to 2%, and temperature at the output of the integrator was 75 °C - 80 °C.

### Example 4

PET thermoplastic granules having a particle size of up to 3 mm in an amount of 70 parts by weight are mixed with wood sawdust having an input average particle size of 5 mm and an input moisture content of 10% by weight in an amount of 15 parts by weight, 10 parts by weight of crystalline calcitic limestone having an input particle size of up to 3 mm and an input moisture content of 4% by weight, and 5 parts by weight of dry finely-ground talc; and this mixture is fed along with air in an amount of 0.7 m³ per kg of the mixture to the mechanical-thermal integrator of Example 1 and subjected to the treatment as described therein. This treatment produced PET agglomerates with finely dispersed particles of wood, calcitic limestone, talc, and muscovite, these agglomerates having a size of up to 3 mm, moisture of up to 2%, and temperature at the output of the integrator was 60 °C - 70 °C

### Example 5

PET thermoplastic granules having a size of up to 5 mm in an amount of 70 parts by weight are mixed with wood sawdust having an average input particle size of 5 mm and an input moisture content of 10% by weight in an amount of 15 parts by weight, 5 parts by weight of crystalline calcitic limestone having an input particle size of up to 3 mm and an input moisture content of 4% by weight, and 10 parts by weight of dry finely-ground muscovite; and this mixture is fed along with air in an amount of 0.7 m³ per kg of the mixture to the mechanical-thermal integrator of Example 1 and subjected to the treatment as described therein. This treatment produced PET agglomerates with finely dispersed particles of wood, calcitic limestone, talc, and muscovite, these agglomerates having a size of up to 3 mm, moisture of up to 2% by weight and temperature at the output of the integrator was 80 °C - 120 °C.

### Example 6

PET thermoplastic granules having a size of up to 3 mm in an amount of 70 parts by weight are mixed with ground straw having an average input particle size of 2 mm and an input moisture content of 5% by weight in an amount of 15 parts by weight, 5 parts by weight of crystalline calcitic limestone having an input particle size of up to 3 mm and an input moisture content of 4% by weight, 5 parts by weight of dry finely-ground talc, and 5 parts by weight of dry finely-ground muscovite; and this mixture is fed along with air in an amount of 1.2 m³ per kg of the mixture to the mechanical-thermal integrator of Example 1 and subjected to the treatment as described therein. This treatment produced PET agglomerates with finely dispersed particles of lignocellulosic material, calcitic limestone, talc, and muscovite, these agglomerates having, size of up to approximately 2 mm, moisture of up to 2% by weight, and temperature at the output of the integrator was 60 °C - 70 °C.

### Example 7

PET thermoplastic granules having a size of up to 3 mm in an amount of 70 parts by weight are mixed with wood sawdust having an average input particle size of 5 mm and an input moisture content of 10% by weight in an amount of 15 parts by weight, 7 parts by weight of crystalline calcitic limestone having an input particle size of up to 3 mm and an input moisture content of 4% by weight, and 3 parts by weight of dry finely-ground talc, and 5 parts by weight of dry, inactivated bentonite; and this mixture is fed along with air in an amount of 0.7 m³ per kg of the mixture to the mechanical-thermal integrator of Example 1 and subjected to the treatment as described therein. This treatment produced PET agglomerates with finely dispersed particles of wood, calcitic limestone, inactivated bentonite, and talc, these agglomerates having a size of up to 3 mm, moisture of up to 2% by weight and temperature at the output of the integrator was 60 °C - 80 °C.

### Example 8

PET thermoplastic granules having a size of up to 6 mm in an amount of 25 parts by weight are mixed with wood sawdust having an average input particle size of 5 mm and an input moisture content of 25% by weight in an amount of 35 parts by weight of sawdust, 20 parts by weight of crystalline calcitic limestone having an input particle size of up to 3 mm and an input moisture content of 4% by weight, and 20 parts of inactivated, fine-grained bentonite having a moisture content of 2% by weight; and this mixture is fed along with air in an amount of 1.5 m³ per kg of the mixture to the mechanical-thermal integrator of Example 1 and subjected to the treatment as described therein. This treatment produced PET agglomerates with finely dispersed particles of wood, calcitic limestone and bentonite, these agglomerates having weight of a size of up to 1 mm, moisture of up to 2% by weight, and temperature at the output of the integrator was 50 °C - 55 °C.

### Example 9

PET thermoplastic granules having a size of up to 5 mm in an amount of 30 parts by weight are mixed with wood chips having maximum input particle size of 15 mm and an input moisture content of 25% by weight in an amount of 40 parts by weight of the wood chips, 20 parts by weight of crystalline calcitic limestone having an input particle size of up to 3 mm and an input moisture content of 4 % by weight, 5% by weight of dry talc having an input particle size of up to 3 mm, and 5% by weight of dry finely-grained Na-activated bentonite; and this mixture is fed along with air in an amount of 0.7 m³ per kg of the mixture to the mechanical-thermal integrator of Example 1 and subjected to the treatment as described therein. This treatment produced PET agglomerates with finely dispersed particles of wood, calcitic limestone, talc, and activated bentonite, these agglomerates having size of up to 3 mm, moisture of up to 2% by weight and temperature at the output of the integrator was 90 °C - 120 °C.

### Example 10

Biodegradable thermoplastic material - thermoplastic starch in a powder form in an amount of 55 parts by weight is mixed with wood sawdust having an average input particle size of up to 0.5 mm and an input moisture content of 20% by weight in an amount of 25 parts by weight, and pure sparitic limestone from Certovy schody (Devil's Stairs) locality having a particle size of up to 2.5 mm and a moisture content of up to 5% by weight in an amount of 20 parts by weight; and this mixture is fed along with air in an amount of 0.7 m³ per kg of the mixture of the treated materials into the counter-rotating twin-rotor mechanical-thermal integrator between two counter-rotating coaxial rotors 1, each having a diameter of 800 mm and a peripheral speed of 110 m/s. The mixture is fed to an area near the centre of the rotation thereof. Four circular rows of the mechanical force pulse means having trapezoidal cross-section are arranged on one of the rotors, forming convergent nozzles 4 with the input cross-section width of **d₁** = 40 mm and the output cross-section width of **d₂** = 12 mm, and the nozzle length of **I₁** = 40 mm, wherein in the first two rows, there are 30 means 2 giving a mechanical force pulse arranged per row; and in the other two rows, there are 40 means 2 giving the mechanical force pulse arranged per row. On the opposite, counter-rotating rotor 1, there are two circular rows of means 2 giving the mechanical force pulse in the form of prisms of trapezoidal cross-section arranged, the wider and the shorter base of which is 10 mm and 6 mm long, respectively, 12 mm high and which fit between the rows of means 2 giving the mechanical force pulse on the opposite rotor, wherein 90 means 2 giving the mechanical force pulse are arranged in the first row having a diameter of 700 mm and 120 means 2 giving the mechanical force pulse are arranged in the row having a diameter of 760 mm, the vertical distance between rotors being 18 mm. This treatment produced agglomerates of thermoplastic starch and fine grains of wood and limestone powder, these agglomerates having the size of up to 5 mm, moisture content of up to 2% by weight, and the integrator output temperature of 70 °C - 75 °C, suitable for the production of compostable and fully biodegradable products.

### Example 11

Biodegradable PHB thermoplastic granules having a size of up to 5 mm in an amount of 60 parts by weight are mixed with 20 parts by weight of wood sawdust having an average input particle size of 0.5 mm and an input moisture content of 10% by weight, and 20 parts by weight of crystalline calcitic limestone obtained from the Lipová-láznè locality having a particle size of 1.5 mm and an input moisture content of 4% by weight; and this mixture is fed along with air in an amount of 0.8 m³ per kg of the mixture to the mechanical-thermal integrator of Example 1 and subjected to the treatment as described therein. This treatment produced PHB agglomerates with finely dispersed wood and calcitic limestone particles, these agglomerates having, size of up to 3 mm, moisture of up to 2% by weight and temperature at the output of the integrator was 80 °C - 100 °C.

### Example 12

Granules of size of 2 mm - 6 mm from regranulated thermoplastic foil made of biodegradable thermoplastic starch in the amount of 40 parts by weight are mixed with 40 parts by weight of wood sawdust having an input moisture content of 25% by weight, 5 parts by weight of crystalline calcitic limestone having an input particle size of 0-2 mm and a moisture content of 4% by weight, obtained from Lipová-láznè locality, 5 parts by weight of dry, finely-ground talc, 5 parts by weight of dry, Na-activated bentonite, and 5 parts by weight of the dry powder of humic acid; and this mixture is fed together with air in an amount of 0.7 m³ per kg of the mixture to the mechanical-thermal integrator. The mixture is introduced into the space between the two rotors 1 spaced 42 mm apart, as measured at a vertical distance. Each rotor 1 has a diameter of 780 mm and rotates at a peripheral speed of 125 ms⁻¹. On one rotor 1, there are two concentric circular rows of means 2 giving the mechanical force pulse in the form of pins with a square cross-section in a plane parallel to the plane of rotor rotation arranged, wherein the first row of means 2 giving the mechanical force pulse that is the closest to the centre of rotation has a diameter of 558 mm and comprises 42 means 2 giving the mechanical force pulse and the second row of means 2 giving the mechanical force pulse has a diameter of 626 mm and comprises 94 means 2 giving the mechanical force pulse, and the third row of means 2 giving the mechanical force pulse has a diameter of 690 mm and consists of 54 accelerating blades inclined 30° to the tangent to the working row circle at the point of blade attachment, and, finally, the fourth row of mechanical force pulse means having a diameter of 762 mm consists of 60 pieces of accelerating blades inclined 30° to the tangent to the working row circle at the point of blade attachment. On the opposite second rotor 1, there are two rows of means 2 giving the mechanical force pulse in the form of square pins of size of 12 mm × 12 mm and a height of 28 mm, and a third row of means 2 giving the mechanical force pulse designed as braking blades. The first row of means 2 giving the mechanical force pulse on the second rotor 1, which is arranged closest to the centre, has a diameter of 592 mm and comprises 49 means 2 giving the mechanical force pulse, i.e. the above-mentioned four-sided pins, the second row of means 2 giving the mechanical force pulse has a diameter of 658 mm and comprises 112 means 2 giving the mechanical force pulse, i.e. the above-mentioned four-sided pins, and the third row of mechanical force pulse means formed as braking blades inclined 45° to the tangent to the working row circle at the point of blade attachment has a diameter of 726 mm, wherein all working bodies contained therein have a height of 35 mm from the rotor surface. This treatment produced agglomerates of thermoplastic starch, fine grains of wood, limestone powder, talc and bentonite modified by the humic acid, these agglomerates having the size of up to 3 mm, moisture content of up to 2% by weight, and the integrator output temperature of 70 °C - 75 °C, suitable for the production of compostable and fully biodegradable products.

### Example 13

Powdered wheat starch in the amount of 60 parts by weight is mixed with 20 parts by weight of wood sawdust having an average input particle size of 1.5 mm and an input moisture content of 70% and 10 parts by weight of pure sparitic limestone obtained from the Čertovy schody (Devil's Stairs) locality having a particle size of 2.5 mm and an input moisture content of 10%, with 3 parts by weight of inactivated bentonite having an input particle size of up to 0.01 mm and an input moisture content of 20% by weight, glycerol in an amount of 2 parts by weight, water in an amount of 5 parts by weight, along with air in an amount of 0.5 m³ per kg of the mixture are fed to the mechanical-thermal integrator with two counter-rotating rotors 1 having a diameter of 780 mm, mutual peripheral speed of 310 m·s⁻¹ and a vertical distance therebetween of 35 mm, wherein the first row of mechanical force pulse means of a diameter of 620 mm and consisting of 42 cylindrical bodies having a diameter of 15 mm and a height of 28 mm is installed on the one rotor; further, the second row of mechanical force pulse means 2 of a diameter of 670 mm and consisting of 54 mechanical force pulse means and the third row of a diameter of 720 mm and consisting of 54 mechanical force pulse means 2 are installed on the same rotor 1. The second and third rows of mechanical force pulse means 2 are formed, of which two nearest neighbour mechanical force pulse means 2 act as a convergent nozzle to compress the raw material mixture with air to 70% of the original volume and the another one row of mechanical force pulse means 2 in the form of three-sided pins of a height of 28mm, which has a diameter of 755 mm; on the opposite rotor 1, one row of 50 mechanical force pulse means 2 in the form of cylindrical impact bodies of a diameter of 15mm and a height of 28mm high is installed, having a diameter of 645mm; further, there is another row of 54 mechanical force pulse means 2 in the form three-sided pins of a height of 28 mm, having a diameter of 695 mm arranged; and further two rows of mechanical force pulse means 2 are installed on the same rotor 1, wherein the first one has a diameter of 740 mm and comprises 60 mechanical force pulse means, and the second row has a diameter of 770 mm and comprises 60 mechanical force pulse means 2, of which the two nearest adjacent mechanical force pulse means 2 act as a convergent nozzle to compress the mixture of propellant gas with the treated raw materials up to 50% of the original volume. This treatment produced agglomerates of thermoplastic starch, fine grains of wood, limestone powder, and bentonite, these agglomerates having the size of up to 5 mm, moisture content of up to 2% by weight, and the integrator output temperature of 80 °C - 85 °C, suitable for the production of compostable and fully biodegradable products.

### Example 14

Powdered wheat starch in an amount of 35 parts by weight is mixed with 30 parts by weight of wood sawdust having an average input particle size of 1.5 mm and an input moisture content of 40% and 15 parts by weight of pure sparitic limestone obtained from the Certovy schody (Devil's Stairs) locality having a particle size of 2.5 mm and an input moisture content of 10%, with 9 parts by weight of inactivated bentonite having an input particle size of up to 0.01 mm and an input moisture content of 20% by weight, glycerol in an amount of 3 parts by weight, water in an amount of 7 parts by weight, and one part by weight of citric acid, along with air in an amount of 0.6 m³ per kg of the mixture is fed into the mechanical-thermal integrator of Example 13 and subjected to the treatment described therein. This treatment produced agglomerates of thermoplastic starch, fine grains of wood, limestone powder, and bentonite, these agglomerates having the size of up to 4 mm, moisture content of up to 2%, and the integrator output temperature of 55 °C - 65 °C, suitable for the production of compostable and fully biodegradable products.

### Example 15

Potato starch powder in the amount of 40 parts by weight is mixed with 5 parts by weight of dry finely-ground talc, with 30 parts by weight of wood sawdust having an average particle size of 2.5 mm and an input moisture content of 50% by weight, 5 parts by weight of crystalline calcitic-dolomitic limestone from the Bohdanec locality having an average input particle size of up to 4 mm and an input moisture content of 30% by weight, 5 parts by weight of Na-activated bentonite having an input moisture content of 10% by weight, 2 parts by weight of sorbitol, 3 parts by weight of glycerine, 7 parts by weight of water, and 3 parts by weight of MgO powder along with air in an amount of 0.8 m³ per kg of the mixture is fed into the mechanical-thermal integrator of Example 1 and subjected to the treatment described therein. This treatment produced agglomerates of thermoplastic starch with finely dispersed particles of wood, calcitic limestone, bentonite, and Mg(OH)₂, these agglomerates having the size of up to 3 mm, moisture content of up to 2% by weight, and temperature at the output of the integrator was 60 °C - 65 °C.

### Example 16

Granulated wheat flour having a granule size of up to 4 mm, containing about 60% by weight of starch and 35% by weight of gluten, in an amount of 50 parts by weight is mixed with 15 parts by weight of wood sawdust having an input particle size of up to 3 mm and a moisture content of 50% by weight, 10 parts of crystalline calcitic limestone obtained from Lipová-láznè locality having a grain size of up to 3 mm and a moisture content of approximately 4% by weight, 5 parts by weight of dry inactivated bentonite inactivated, and 20 parts of water; and this mixture along with air in an amount of 0.5 m³ per kg of the mixture is fed into the mechanical-thermal integrator of Example 1 and subjected to the treatment described therein. This treatment produced fine-grained agglomerates of thermoplastic starch with gluten, finely dispersed particles of wood and calcitic limestone, these agglomerates having the size of up to 3 mm, moisture content of approximately 3% by weight, and the temperature in the range of 50 °C - 85 °C.

### Example 17

Pre-crushed recycled ABS thermoplastic having an average particle size of 4 mm in an amount of 60 parts by weight is mixed with wood sawdust having an average input particle size of 2 mm and an input moisture content of 10% by weight in an amount of 20 parts by weight, 10 parts by weight of crystalline calcitic limestone obtained from Lipová-láznè locality having an average input particle size of 2 mm and a moisture content of 4% by weight, and water in an amount of 10 parts by weight; and this mixture is fed along with air in an amount of 0.7 m³ per kg of the mixture to the mechanical-thermal integrator of Example 1 and subjected to the treatment as described therein. This treatment produced ABS agglomerates with finely dispersed wood and calcitic limestone particles, these agglomerates having the size of up to 3 mm, moisture content of approximately 2% by weight, and the temperature between 80 °C-90 °C.

### Example 18

ABS thermoplastic granules having an average particle size of 3 mm in an amount of 50 parts by weight are mixed with wood sawdust having an average input particle size of 2 mm and an input moisture content of 10% by weight in an amount of 10 parts by weight, 10 parts by weight of crystalline calcitic limestone obtained from Lipová-lázně locality having an average input particle size of 2 mm and a moisture content of 4% by weight, and water in an amount of 30 parts; and this mixture is fed along with air in an amount of 0.7 m³ per kg of the mixture to the mechanical-thermal integrator of Example 1. The mixture is fed between two counter-rotating coaxial rotors 1, into an area close to the centre of the rotation thereof. This treatment produced ABS agglomerates with finely dispersed particles of wood and calcitic limestone, these agglomerates having the size of up to 3 mm, moisture content of approximately 3.5% by weight, and the temperature in the range of 85 °C - 110 °C.

### Example 19

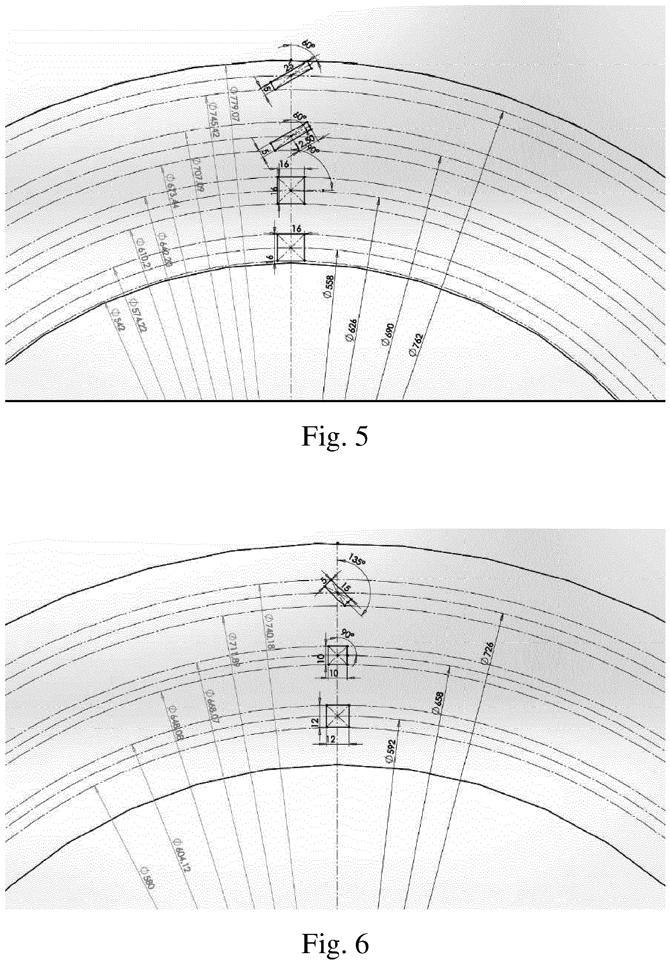

Granulated dry thermoplastic starch having a granule size of approximately 3 mm in an amount of 40 parts by weight is mixed with 40 parts by weight of wood sawdust having an input moisture content of 25% by weight, 5 parts by weight of dry, finely-ground talc, and 15 parts by weight of water; and this mixture is fed along with air in an amount of 0.7 m³ per kg into mechanical-thermal integrator of Figs. 5 and 6, namely into the area between the two counter-rotating rotors positioned in a vertical distance of 42 mm therebetween. Each rotor has a diameter of 780 mm, each one rotates at a peripheral speed of 135 m·s⁻¹. Due to the higher speed, more energy is provided to the treated mixture and a higher temperature for plasticization is achieved, wherein two concentric circular rows of mechanical force pulse means in the form of pins of a square cross-section in a plane parallel to the plane of rotor rotation are arranged on one rotor, wherein the first row closest to the centre of rotation has a diameter of 558 mm and comprises 42 mechanical force pulse means and the second row of mechanical force pulse means has a diameter of 626 mm and comprises 94 mechanical force pulse means, as well as the third row of accelerating blade bodies of a diameter of 690 mm with 54 blades inclined 30° to the tangent to the working row circle at the point of blade attachment and, further, the fourth row of mechanical force pulse means of a diameter of 762 mm with 60 accelerating blades inclined 30° to the tangent to the working row circle at the point of blade attachment are arranged thereon; and, on the opposite second rotor, there two rows of impact working bodies in the form of four-sided pins of a size of 12 mm × 12 mm and a height of 28 mm arranged, wherein the first row closest to the centre has a diameter of 592 mm and comprises 49 mechanical force pulse means, the other row of mechanical force pulse means has a diameter of 658 mm with 112 mechanical force pulse means, and the third row of mechanical force pulse means acting as braking blades inclined 45° to the tangent to the working row circle at the point of blade attachment has a diameter of 726 mm, wherein all the working bodies has a height of 35 mm from the rotor surface. This treatment produced agglomerates of thermoplastic starch, fine grains of wood and talc, these agglomerates having the size of up to 3 mm, moisture content of up to 3% by weight, and the integrator output temperature of 80 °C - 95 °C, suitable for the production of compostable and fully biodegradable products.

### Example 20

Biodegradable thermoplastic material - thermoplastic starch in a powder form in an amount of 55 parts by weight is mixed with wood sawdust having an average input particle size of up to 0.5 mm and an input moisture content of 20% by weight in an amount of 25 parts by weight, and pure sparitic limestone from Certovy schody (Devil's stairs) locality having a particle size of up to 2.5 mm and a moisture content of up to 5% by weight in an amount of 20 parts by weight; and this mixture is fed along with air in an amount of 0.90 m³ per kg of the mixture of the treated materials into the counter-rotating twin-rotor mechanical-thermal integrator of Example 10, wherein the two counter-rotating coaxial rotors have a peripheral speed of 120 m/s. The mixture is fed to an area near the centre of the rotation thereof. This treatment produced agglomerates of thermoplastic starch and fine grains of wood and limestone powder, these agglomerates having the size of up to 2.5 mm, moisture content of up to 2%, and the integrator output temperature of 75 °C - 80 °C, suitable for the production of compostable and fully biodegradable

### Example 21

Biodegradable thermoplastic material - thermoplastic starch in a powder form in an amount of 55 parts by weight is mixed with wood sawdust having an average input particle size of up to 0.5 mm and an input moisture content of 20% by weight in an amount of 25 parts by weight, and pure sparitic limestone from Certovy schody (Devil's Stairs) locality having a particle size of up to 2.5 mm and a moisture content of up to 5% in an amount of 20 parts by weight; and this mixture is fed along with air in an amount of 0.6 m³ per kg of the mixture of the treated materials into the mechanical-thermal integrator of Example 20 and subjected to the treatment described therein. This treatment produced agglomerates of thermoplastic starch and fine grains of wood and limestone powder, these agglomerates having the size of up to 5 mm, moisture content of up to 2%, and the integrator output temperature of 70 °C - 95 °C, suitable for the production of compostable and fully biodegradable

### Example 22

PET thermoplastic granules having a size of up to 3 mm in an amount of 75 parts by weight are mixed with wood sawdust having an average input particle size of 5 mm and an input moisture content of 10% by weight in an amount of 15 parts by weight, 10 parts by weight of crystalline calcitic limestone having an input particle size of up to 3 mm and an input moisture content of 4% by weight; and this mixture is fed along with air in an amount of 0.5 m³ per kg of the mixture to the mechanical-thermal integrator of Example 1 and subjected to the treatment as described therein. This treatment produced PET agglomerates with finely dispersed wood and calcitic limestone particles, these agglomerates having a size of up to 7 mm, moisture of up to 2%, and temperature at the output of the integrator was 70 °C - 85 °C.

### Example 23

PET thermoplastic granules having a size of up to 6 mm in an amount of 75 parts by weight are mixed with wood sawdust having an input average particle size of 5 mm and an input moisture content of 10% by weight in an amount of 15 parts by weight, 10 parts by weight of crystalline calcitic limestone having an input particle size of up to 3 mm and an input moisture content of 4% by weight; and this mixture is fed along with air in an amount of 1.0 m³ per kg of the mixture to the mechanical-thermal integrator of Example 1 and subjected to the treatment as described therein. This treatment produced PET agglomerates with finely dispersed wood and calcitic limestone particles, these agglomerates having weight a size of up to 1.5 mm, moisture of up to 2% by weight, and temperature at the output of the integrator was 60 °C - 85 °C.

### Example 24

Biodegradable thermoplastic material - thermoplastic starch in a powder form in an amount of 40 parts by weight is mixed with gelatine powder in an amount of 15 parts by weight, wood sawdust having an average input particle size of up to 0.5 mm and an input moisture content of 30% by weight in an amount of 25 parts by weight, and pure sparitic limestone from Čertovy schody (Devil's Stairs) locality having a particle size of up to 2.5 mm and a moisture content of up to 5% in an amount of 20 parts by weight; and this mixture is fed along with air in an amount of 0.7 m³ per kg of the mixture of the treated materials into the mechanical-thermal integrator of Example 20 and subjected to the treatment described therein. This treatment produced agglomerates of thermoplastic starch, gelatine, and fine grains of wood and limestone powder, these agglomerates having the size of up to 5 mm, moisture content of up to 4% by weight, and the integrator output temperature of 70 °C - 85 °C, suitable for the production of compostable and fully biodegradable products.

### Example 25

Granulated, dry biodegradable PHB thermoplastic having a granule size of approximately 3 mm in an amount of 55 parts by weight is mixed with 5 parts b weight of dry pectin powder, 30 parts by weight of wood sawdust having an average input particle size of 0.5 mm and an input moisture content of 10% by weight, and 10 parts by weight of crystalline calcitic limestone obtained from the Lipová-lázň locality having a particle size of 1.5 mm and an input moisture content of 4% by weight; and this mixture is fed along with air in an amount of 0.8 m³ per kg of the mixture to the mechanical-thermal integrator of Example 1 and subjected to the treatment as described therein. This treatment produced PHB agglomerates with pectin, finely dispersed wood and calcitic limestone particles, these agglomerates having a size of up to 3 mm, moisture of up to 2% by weight and temperature at the output of the integrator was 60 °C - 85 °C.

### Example 26

Granules of biodegradable PLA polymer having a granule size of approximately 4 mm in an amount of 55 parts by weight are mixed with 25 parts by weight of wood sawdust having an average input particle size of up to 4 mm and an input moisture content of 25% by weight, 5 parts by weight of crystalline calcitic limestone having an input particle size of 0-2 mm and a moisture content of 4% by weight, obtained from Lipová-lázně locality, 5 parts by weight of dry, finely-ground talc, 5 parts by weight of dry, Na-activated bentonite, and 5 parts by weight of the dry pectin powder; and this mixture is fed together with air in an amount of 0.7 m³ per kg of the mixture to the mechanical-thermal integrator of Example 12. This treatment produced agglomerates of thermoplastic PLA, fine grains of wood, limestone powder, talc, bentonite, and pectin, these agglomerates having the size of up to 3 mm, moisture content of up to 2% by weight, and the integrator output temperature of 70 °C - 95 °C, suitable for the production of compostable and fully biodegradable products.

### Example 27

Biodegradable thermoplastic material - thermoplastic starch in a powder form in an amount of 45 parts by weight is mixed with 10 parts by weight of wheat flour containing unmodified starch and gluten, wood sawdust having an average input particle size of up to 0.5 mm and an input moisture content of 40% by weight in an amount of 25 parts by weight, and pure sparitic limestone from Certovy schody (Devil's Stairs) locality having a particle size of up to 2.5 mm and a moisture content of up to 5% by weight in an amount of 20 parts by weight; and this mixture is fed along with air in an amount of 0.7 m³ per kg of the mixture of the treated materials into the counter-rotating twin-rotor mechanical-thermal integrator of Example 20 and subjected to the treatment as described therein. This treatment produced agglomerates of thermoplastic starch, gluten, and fine grains of wood and limestone powder, these agglomerates having the size of up to 5 mm, moisture content of up to 2% by weight, and the integrator output temperature of 70 °C - 85 °C, suitable for the production of compostable and fully biodegradable products.

### Example 28

Biodegradable thermoplastic material - thermoplastic starch in a powder form in an amount of 55 parts by weight is mixed with wood sawdust having an average input particle size of up to 0.5 mm and an input moisture content of 20% by weight in an amount of 25 parts by weight, and white crystalline limestone obtained from Lipová-lázně locality having a particle size of up to 2.5 mm and a moisture content of up to 4% by weight in an amount of 10 parts by weight, dry powder magnesium oxide MgO (E530) in an amount of 7 parts by weight, and dry powder calcium acetate (E263) in an amount of 3 parts by weight; and this mixture is fed along with air in an amount of 0.75 m³ per kg of the mixture of the treated materials into the counter-rotating twin-rotor mechanical-thermal integrator of Example 20 and subjected to the treatment as described therein. This treatment produced agglomerates of thermoplastic starch and fine grains of wood and limestone powder, degradability in aqueous environment is increased by adding MgO and calcium acetate, these agglomerates having the size of up to 2 mm, moisture content of up to 2%, and the integrator output temperature of 65 °C - 80 °C, suitable for the production of compostable and fully biodegradable products.

### Example 29

Biodegradable thermoplastic material - thermoplastic starch in a powder form in an amount of 55 parts by weight is mixed with wood sawdust having an input particle size of up to 1 mm and an input moisture content of 20% by weight in an amount of 20 parts by weight, white crystalline limestone obtained from Lipová-lázně locality having a particle size of up to 2.5 mm and a moisture content of up to 4% by weight in an amount of 10 parts by weight, dry powder CaSO₄ · ½ H₂O (gypsum) in an amount of 5 parts by weight, dry powder calcium oxide CaO in an amount of 5 parts by weight, and dry powder alumunium sulphate Al₂(SO₄)₃ in an amount of 5 parts by weight; and this mixture is fed along with air in an amount of 0.75 m³ per kg of the mixture of the treated materials into the counter-rotating twin-rotor mechanical-thermal integrator of Example 20 and subjected to the treatment as described therein. This treatment produced agglomerates of thermoplastic starch and fine grains of wood and limestone powder, degradability in the aqueous environment is increased by adding CaO, CaSO₄ · ½ H₂O a Al₂(SO₄)₃, which react in the aqueous environment to ettringite Ca₆Al₂(SO₄)₃(OH)₁₂·26(H₂O) , and these aggregates have the size of up to 2 mm, moisture content of up to 2% by weight and the integrator output temperature of 70 °C - 85 °C, suitable for the production of compostable and fully biodegradable products.

### Example 30

Granulated dry biodegradable thermoplastic starch having a granule size of up to 8 mm in an amount of 40 parts by weight is mixed with 5 parts by weight of dry finely-ground talc, with 30 parts by weight of wood sawdust having an average particle size of 2.5 mm and an input moisture content of 25% by weight, 5 parts by weight of crystalline calcitic-dolomitic limestone from the Krty locality having an average input particle size of up to 4 mm and an input moisture content of 5% by weight, 5 parts by weight of Na-activated bentonite having an input moisture content of 5% by weight, 14.9 parts by weight of 80% aqueous solution of magnesium lignosulfonate, and 0.1 part by weight of calcium citrate; and this mixture along with air in an amount of 0.8 m³ per kg of the mixture is fed into the mechanical-thermal integrator of Example 1 and subjected to the treatment as described therein. This treatment produced agglomerates of thermoplastic starch with finely dispersed particles of wood, calcitic-dolomitic limestone, talc, and bentonite, these agglomerates having the size of up to 3 mm, moisture content of up to 2% by weight, and the output integrator temperature of 60 °C - 75 °C, the subsequent rheological properties and biodegradability of the products are affected by the presence of Mg lignosulfonate.

### Example 31

Biodegradable thermoplastic material - thermoplastic starch in a powder form in an amount of 30 parts by weight is mixed with wood sawdust having an average input particle size of up to 1.5 mm and an input moisture content of 50% by weight in an amount of 20 parts by weight, and powder methakaoline burned at 750 °C in an amount of 30 parts by weight, with 10 parts by weight of potassium silicate (water glass) containing 26% by weight of K₂O, 3 parts by weight of dry KOH in a form of granules of a size of up to 5 mm, and 7 parts by weight of water; and this mixture is fed along with air in an amount of 0.75 m³ per kg of the mixture of the treated materials into the counter-rotating twin-rotor mechanical-thermal integrator of Example 20 and subjected to the treatment described therein. This treatment produced agglomerates of thermoplastic starch, fine grains of wood and hydroceramics, these agglomerates having the size of up to 2 mm, moisture content of up to 3% by weight, and the integrator output temperature of 65 °C - 80 °C.

### Example 32

Biodegradable thermoplastic material - thermoplastic starch in a powder form in an amount of 55 parts by weight is mixed with wood sawdust having an average input particle size of up to 0.5 mm and an input moisture content of 20% by weight in an amount of 25 parts by weight, and gray sparitic limestone from Stramberk locality having a particle size of up to 2.5 mm and a moisture content of up to 5% by weight in an amount of 17 parts by weight, and dry powder titanium dioxide - TiO₂ (E171) in an amount of 3 parts by weight; and this mixture is fed along with air in an amount of 0.75 m³ per kg of the mixture of the treated materials into the mechanical-thermal integrator (MTI) of Example 10, wherein the two counter-rotating coaxial rotors have a peripheral speed of 120 m/s.

This treatment produced agglomerates of thermoplastic starch and fine grains of wood and limestone powder, whiteness of which is increased by adding TiO₂; these agglomerates having the size of up to 2 mm, moisture content of up to 2% by weight, and the integrator output temperature of 65 °C - 75 °C, suitable for the production of compostable and fully biodegradable products.

### Example 33

PET thermoplastic granules having a size of up to 7 mm in an amount of 45 parts by weight are mixed with wood sawdust having an average input particle size of 2.5 mm and an input moisture content of 15% by weight in an amount of 40 parts by weight of sawdust, 5 parts by weight of crystalline calcitic limestone having an input particle size of up to 3 mm and an input moisture content of 4% by weight, and 10 parts by weight of montmorillonite ochre (a mixture of montmorillonite and limonite containing 16% by weight of F₂O₃); and this mixture is fed along with air in an amount of 0.7 m³ per kg of the mixture to the mechanical-thermal integrator of Example 1 and subjected to the treatment as described therein. This treatment produced PET agglomerates with finely dispersed particles of wood, calcitic limestone, and montmorillonite, ochre-tinted; these agglomerates having size of up to 3 mm, of moisture up to 2% by weight and temperature at the output of the integrator was 80 °C- 115 °C.

### Example 34

Powdered corn starch in an amount of 63 parts by weight is thoroughly mixed with water in an amount of 30 parts by weight, glycerine in an amount of 5 parts by weight, 2 parts by weight of citric acid; and this mixture is heated to 55 °C while stirring. After 10 minutes of stirring and heating, this mixture is fed along with wood sawdust having an average input particle size of 3.5 mm and an input moisture content of 10% by weight in an amount of 40 parts by weight, and crystalline limestone from the Lipová-lázně locality having an input particle size of up to 3 mm in an amount of 20 parts by weight pre-heated to 120 °C and with air in an amount of 0.7 m³ per kg of the mixture into the mechanical-thermal integrator of Example 1 and subjected to the treatment as described therein. This treatment produced thermoplastic starch agglomerates with finely dispersed wood and limestone particles, these agglomerates having, size of up to 3 mm, moisture of up to 2% by weight and temperature at the output of the integrator was 60 °C - 85 °C.

### Example 35

Powdered wheat starch in an amount of 60 parts by weight is thoroughly mixed with water in an amount of 30 parts by weight, glycerine in an amount of 5 parts by weight, sorbitol in an amount of 3 parts by weight, and citric acid in an amount of 2 parts; and this mixture is heated to 85 °C while stirring in a continuous shearing mixer. After 15 minutes of stirring and heating, this mixture is mixed with wood sawdust having an average input particle size of 3.5 mm and an input moisture content of 30% by weight in an amount of 40 parts by weight, and crystalline limestone from the Lipová-lázně locality having an input particle size of up to 3 mm and a moisture content of 2% by weight in an amount of 20 parts by weight, wherein the wood sawdust as well as limestone are pre-heated to 50 °C; and this is fed along with air in an amount of 0.7 m³ per kg of the mixture into the mechanical-thermal integrator of Example 1 and subjected to the treatment as described therein. This treatment produced thermoplastic starch agglomerates with finely dispersed wood and limestone particles, these agglomerates having, size of up to 3 mm, moisture of up to 2% by weight and temperature at the output of the integrator was 90 °C - 95 °C.

### Example 36

Potato starch in the amount of 55 parts by weight is mixed with 5 parts by weight of dry finely-ground talc, with 30 parts by weight of wood sawdust having an average particle size of 2.5 mm and an input moisture content of 60% by weight, 2 parts by weight of sorbitol, 2 parts by weight of glycerine, 5 parts by weight of water, and 1 part by weight of citric acid, and along with air in an amount of 0.8 m³ per kg of the mixture is fed into the mechanical-thermal integrator of Example 1 and subjected to the treatment as described therein. This treatment produced agglomerates of thermoplastic starch with finely dispersed particles of wood, calcitic limestone, bentonite, and Mg(OH)₂, these agglomerates having the size of up to 3 mm, moisture content of up to 2% by weight, and temperature at the output of the integrator was 60 °C - 75 °C.

These agglomerates in an amount of 60 parts by weight are further mixed with 15 parts by weight of wood sawdust having a particle size of up to 3 mm and an input moisture content of 15% by weight, 10 parts of crystalline limestone obtained from the Lipová-láznè locality having a particle size of up to 3 mm and an input moisture content of 3% by weight, 10 parts by weight of dry gelatine powder, and 5 parts by weight of water. The mixture, thus formed, along with air in an amount of 0.7 m³ per kg of the mixture is fed into the mechanical-thermal integrator of Example 12. This treatment produced thermoplastic starch agglomerates, fine grains of wood, limestone powder, talc, modified with gelatine, these agglomerates having a size of up to 3.5 mm, moisture content of up to 2% by weight, and temperature of 75 °C - 90 °C.

### Example 37

Corn flour containing approximately 75% by weight of starch and 10% by weight of gluten, in an amount of 60 parts by weight is mixed with 10 parts by weight of wood sawdust having an input particle size of up to 3 mm and a moisture content of 50% by weight, 10 parts of crystalline calcitic limestone obtained from Lipová-lázně locality having a grain size of up to 3 mm and a moisture content of approximately 4% by weight, 18 parts by weight of water preheated to 90 °C, and 2 parts by weight of glycerine; and this mixture along with air in an amount of 0.5 m³ per kg of the mixture is fed into the mechanical-thermal integrator of Example 1 and subjected to the treatment described therein. This treatment produced fine-grained agglomerates of thermoplastic starch with gluten, finely dispersed particles of wood and calcitic limestone, these agglomerates having the size of up to 3 mm, moisture content of approximately 3% by weight, and the temperature in the range of 90 °C - 95 °C.

These aggregates in an amount of 70 parts by weight are mixed with wood chips having a particle size of approximately 5 mm and a moisture content of 25% by weight in an amount of 15 parts by weight, 5 parts by weight of inactivated bentonite, 7 parts by weight of 80% aqueous solution of magnesium-calcium sulfonate, and 3 parts by weight of urea. This mixture along with air in an amount of 0.6 m³ per kg of the mixture is fed into the mechanical-thermal integrator of Example 13 and subjected to the treatment as described therein. This treatment produced fine-grained agglomerates of thermoplastic starch with gluten, finely dispersed particles of wood and calcitic limestone, these agglomerates having the size of up to 3 mm, moisture content of approximately 3% by weight, and the temperature in the range of 75 °C - 95 °C, modified with sodium lignosulfonate and urea.

The above examples are only illustrative and show the possibilities of mixing substances from the first and the second groups. In relation to the parts of a substance forming the treated mixture, these parts are always considered to be the parts by weight. The particle sizes of the substances of the first and the second groups given in the examples of the invention embodiments are only particularly preferable and are possible to be replaced by particles of any size within the range specified in claim 1. For example, the polymer particle size of 3 mm was given by the commercial availability of PET polymer granule particles. However, it is also possible to use thermoplastic particles of another sizes as specified in claim 1. A similar situation occurs when using wood sawdust as lignocellulosic particles, which are mostly available with a particle size of 0.3 mm to 5 mm, which are therefore also used in the examples. When using lignocellulosic particles of larger sizes, the size thereof is preferable to be reduced first when performing the treatment method, i.e., for example, when passing through the mechanical-thermal integrator, these particles are reduced by hitting the first rows of mechanical force pulse means before entering the next part, where they are processed on the principle of compression and expansion (pressure pulsation), if these means are present. Thus, the particle sizes of materials from the first and second groups used in the examples should not be construed as limiting the present invention to the sizes described.

The advantage of the material preparation method suitable for injection moulding, extrusion and/or thermoforming according to the invention consists in that it allows for materials with substantially larger dimensions than in prior art methods to be processed in a single technological step and, thus, extends the possible range of materials used, wherein the resulting material is perfectly homogenized, with low moisture (up to 2% by weight), allows to process even materials with significantly higher moisture content, even allows to process dry and liquid materials at the same time, and due to higher final temperature of the output material it is possible to process this material to possibly required size of granules or pellets with lower energy consumption. The output material obtained by the material preparation method for injection moulding, extrusion and/or thermoforming according to the present invention is suitable for use in any of these production processes.

## Claims

1. A method of preparing a material suitable for injection moulding, extrusion and/or thermoforming, where at least one thermoplastic is mixed with another material, **characterized in that** a mixture of particles of at least one substance from the first group, comprising thermoplastics and the precursors thereof, having a particle size of up to 10 mm, with at least one substance from the second group, comprising lignocellulosic substances, having a particle size of up to 35 mm, and inorganic substances with a particle size of up to 15 mm is formed, wherein a dry matter ratio of substances of the first group to a total dry matter of substances of the second group is from 0.1 to 3, wherein the mutual ratio of dry matter of lignocellulosic substances and dry matter of inorganic substances from the second group ranges from 0 to 10, the total input moisture of the mixture being at most 70% of the total weight of the mixture; the mixture is fed together with a propellant gas in an amount of 0.4 m³ of the propellant gas per kg of the mixture to 1.5 m³ of the propellant gas per kg of the mixture to the centre of a working area arranged between two coaxial circular plates within a mechanical-thermal integrator, which are provided with mechanical force pulse means to the mixture particles, wherein the two circular plates of the mechanical-thermal integrator rotate against each other, the mechanical force pulse means on each rotating plate impact at least twice with each particle of the mixture, the first mechanical force pulse given to the particles being effected by a collision of the particle with the mechanical force pulse means moving at a speed of at least 40 m·s⁻¹ , wherein each subsequent mechanical force pulse to the particles takes place at least at the same intensity of mechanical force pulse compared to the previous pulse, thus heating and at least separating the particles in the mixture of the treated material, wherein the collisions between particles of substances from the first group and that ones from the second group provide mixture homogenization to form a fine-grained agglomerate of particles of mixture material with a moisture content of up to 2% by weight.

2. The method according to claim 1, **characterized in that** the application of a mechanical force pulse to the particles is repeated by another mechanical force pulse means moving at speed of at least 40 m·s⁻¹ or higher or, subsequently, a pressure of the propellent gas with the treated material mixture is increased suddenly at least twice, at most, however, 100x in a time interval of not bigger than 0.005 s, and then it decreases again.

3. The method according to claim 1 or 2, **characterized in that** the intense turbulent flow of particles of the mixture of substances from the first and second groups is created in the propellant gas when treating the mixture between two circular plates of the mechanical-thermal integrator using the rapid movement of the mechanical force pulse means to intensify mutual collisions.

4. The method according to any of claims 1 to 3, **characterized in that** at least one phyllosilicate and/or a mixture thereof as an inorganic water-insoluble substance is added to the mixture in an amount of from 1% by weight to 40% by weight, relative to the total weight of the mixture.

5. The method according to claim 4, **characterized in that** montmorillonite and/or a mixture of minerals containing at least 40% by weight of montmorillonite is added as phyllosilicate.

6. The method according to any of claims 1 to 5, **characterized in that** at least one substance from the group consisting of thermoplastic starches, polylactic acid (PLA), polyhydroxyalkanoate (PHA), polyhydroxybutyrate (PHB), polyhydroxybutyrate-valerate (PHBV), polycaprolactone (PCL), polybutylene succinate (PBS), maleic anhydride (MAH), maleic anhydride grafting (MAH-g), unmodified and chemically modified humic acids, or mixtures thereof is added as thermoplastic.

7. The method according to any of claims 1 to 6, **characterized in that** a mixture of unmodified starch and/or material containing at least 30% by weight of unmodified starch and water and/or substances containing OH moiety and/or substances containing COOH moiety is added to the mixture of input materials.

8. The method according to at any of claims 1 to 7, **characterized in that** water is added to the mixture of input materials before and/or during their treatment in an amount of up to 40% by weight, relative to the dry weight of the treated materials, to control the temperature of the output agglomerate.

9. The method according to any of claims 1 to 8, **characterized in that** the grain size of the output agglomerate is controlled by regulating an amount of the propellant gas entering the treatment operation.

10. The method according to any of claims 1 to 9, **characterized in that** solid and/or liquid additives from a group consisting of proteins, pectin and gluten, and/or mixtures thereof are added to the mixture of input materials in an amount of from 5% by weight to 35% by weight relative to the weight of the mixture.

11. The method according to at any of claims 1 to 10, **characterized in that** a substance from a group consisting of metals, oxides, hydroxides, organic and/or inorganic salts of alkali metals and/or alkaline earth metals and/or Al, and the mixture and/or solution thereof is added to the mixture of input materials in an amount of from 0.1 to 25% by weight, relative to the dry weight of the input materials, as plasticizers.

12. The method according any of claims 1 to 11, **characterized in that** solid or liquid dyes are added to the mixture of input materials.

13. The method according to any of claims 1 to 12, **characterized in that** the at least one substance from the first group or at least one substance from the second group is preheated to at least 50 °C.

14. A material preparation method suitable for injection moulding, extrusion and/or thermoforming, **characterized in that** the grains of the agglomerate formed by the treatment according to anyone of claims 1 to 12 are repeatedly subjected to said treatment.

## Patentansprüche

1. Verfahren zum Herstellen eines zum Spritzgießen, Extrudieren und/oder Thermoformen geeigneten Materials, wobei mindestens ein Thermoplast mit einem anderen Material gemischt wird, **dadurch gekennzeichnet, dass** ein Gemisch von Partikeln von mindestens einer Substanz aus der ersten Gruppe, die Thermoplaste und die Ausgangsstoffe davon umfasst, mit einer Partikelgröße von bis zu 10 mm, mit mindestens einer Substanz aus der zweiten Gruppe, die Lignocellulosesubstanzen umfasst, mit einer Partikelgröße von bis zu 35 mm, und anorganische Substanzen mit einer Partikelgröße von bis zu 15 mm gebildet wird, wobei ein Trockenmassenverhältnis von Substanzen der ersten Gruppe zu einer Gesamttrockenmasse von Substanzen der zweiten Gruppe von 0,1 bis 3 reicht, wobei das gegenseitige Verhältnis von Trockenmasse von Lignocellulosesubstanzen und Trockenmasse von anorganischen Substanzen aus der zweiten Gruppe von 0 bis 10 reicht, wobei die Gesamteingangsfeuchte des Gemischs höchstens 70 % des Gesamtgewichts des Gemischs beträgt; das Gemisch zusammen mit einem Treibgas in einer Menge von 0,4 m³ des Treibgases pro kg des Gemischs bis 1,5 m³ des Treibgases pro kg des Gemischs zum Zentrum eines Arbeitsbereichs zugeführt wird, der zwischen zwei koaxialen Kreisscheiben innerhalb eines mechanisch-thermischen Integrators angeordnet ist, die mit mechanischen Kraftimpulsmitteln auf die Gemischpartikel versehen sind, wobei sich die zwei Kreisscheiben des mechanisch-thermischen Integrators gegeneinander drehen, die mechanischen Kraftimpulsmittel auf jeder sich drehenden Scheibe mindestens zweimal auf jedes Partikel des Gemischs einwirken, der erste mechanische Kraftimpuls, der auf die Partikel übermittelt wird, durch eine Kollision des Partikels mit den mechanischen Kraftimpulsmitteln bewirkt wird, die sich mit einer Geschwindigkeit von mindestens 40 m/s bewegen, wobei jeder nachfolgende mechanische Kraftimpuls auf die Partikel mindestens mit der gleichen Intensität des mechanischen Kraftimpulses im Vergleich zum vorangehenden Impuls stattfindet, wodurch die Partikel im Gemisch des behandelten Materials erwärmt und zumindest getrennt werden, wobei die Kollisionen zwischen Partikeln von Substanzen aus der ersten Gruppe und denen aus der zweiten Gruppe eine Homogenisierung des Gemischs bereitstellen, um ein feinkörniges Agglomerat aus Partikeln des Gemischmaterials mit einem Feuchtigkeitsgehalt von bis zu 2 Gewichts-% zu bilden.

2. Verfahren nach Anspruch 1, **dadurch gekennzeichnet, dass** die Anwendung eines mechanischen Kraftimpulses auf die Partikel durch ein anderes mechanisches Kraftimpulsmittel wiederholt wird, das sich mit einer Geschwindigkeit von mindestens 40 m/s oder mehr bewegt, oder nachfolgend ein Druck des Treibgases mit dem behandelten Materialgemisch plötzlich auf das mindestens Zweifache, jedoch maximal das 100-Fache in einem Zeitintervall erhöht wird, das nicht größer als 0,005 s ist, und er sich danach wieder senkt.

3. Verfahren nach Anspruch 1 oder 2, **dadurch gekennzeichnet, dass** die intensive turbulente Strömung von Partikeln des Gemischs von Substanzen aus der ersten und der zweiten Gruppe im Treibgas erzeugt wird, wenn das Gemisch zwischen zwei Kreisscheiben des mechanisch-thermischen Integrators unter Verwendung der raschen Bewegung der mechanischen Kraftimpulsmittel behandelt wird, um die wechselseitigen Kollisionen zu intensivieren.

4. Verfahren nach einem der Ansprüche 1 bis 3, **dadurch gekennzeichnet, dass** mindestens ein Phyllosilicat und/oder ein Gemisch davon als anorganische wasserunlösliche Substanz zum Gemisch in einer Menge von 1 Gewichts-% bis 40 Gewichts-%, relativ zum Gesamtgewicht des Gemischs, zugesetzt wird.

5. Verfahren nach Anspruch 4, **dadurch gekennzeichnet, dass** Montmorillonit und/oder ein Gemisch von Mineralien, das mindestens 40 Gewichts-% von Montmorillonit enthält, als Phyllosilicat zugesetzt wird.

6. Verfahren nach einem der Ansprüche 1 bis 5, **dadurch gekennzeichnet, dass** als Thermoplast mindestens eine Substanz aus der Gruppe zugesetzt wird, die aus thermoplastischen Stärken, Polymilchsäure (PLA), Polyhydroxyalkanoat (PHA), Polyhydroxybuttersäure (PHB), Polyhydroxybutyrat-valerat (PHBV), Polycaprolacton (PCL), Polybutylensuccinat (PBS), Maleinsäureanhydrid (MSA), Maleinsäureanhydrid-Pfropfung (MAH-g), unmodifizierten und chemisch modifizierten Huminsäuren oder Gemischen davon besteht.

7. Verfahren nach einem der Ansprüche 1 bis 6, **dadurch gekennzeichnet, dass** ein Gemisch von unmodifizierter Stärke und/oder von Material, das mindestens 30 Gewichts-% an unmodifizierter Stärke und Wasser enthält, und/oder Substanzen, die einen OH-Rest enthalten, und/oder Substanzen, die einen COOH-Rest enthalten, zum Gemisch aus Ausgangsmaterialien zugesetzt wird.

8. Verfahren nach einem der Ansprüche 1 bis 7, **dadurch gekennzeichnet, dass** Wasser zum Gemisch aus Ausgangsmaterialien vor und/oder während deren Behandlung in einer Menge von bis zu 40 Gewichts-%, relativ zum Trockengewicht der behandelten Materialien, zugesetzt wird, um die Temperatur des Ausgabeagglomerats zu regeln.

9. Verfahren nach einem der Ansprüche 1 bis 8, **dadurch gekennzeichnet, dass** die Korngröße des Ausgabeagglomerats durch Regulieren einer Menge des in den Behandlungsvorgang eintretenden Treibgases geregelt wird.

10. Verfahren nach einem der Ansprüche 1 bis 9, **dadurch gekennzeichnet, dass** feste und/oder flüssige Additive aus einer Gruppe, die aus Proteinen, Pektin und Gluten und/oder Mischungen davon besteht, zum Gemisch aus Ausgangsmaterialien in einer Menge, die von 5 Gewichts-% bis 35 Gewichts-% relativ zum Gewicht des Gemischs reicht, zugesetzt werden.

11. Verfahren nach einem der Ansprüche 1 bis 10, **dadurch gekennzeichnet, dass** eine Substanz aus einer Gruppe, die aus Metallen, Oxiden, Hydroxiden, organischen und/oder anorganischen Salzen von Alkalimetallen und/oder Erdalkalimetallen und/oder Al und dem Gemisch und/oder der Lösung davon besteht, dem Gemisch von Ausgangsmaterialien in einer Menge, die von 0,1 bis 25 Gewichts-% relativ zum Trockengewicht der Ausgangsmaterialien reicht, als Plastifikatoren zugesetzt wird.

12. Verfahren nach einem der Ansprüche 1 bis 11, **dadurch gekennzeichnet, dass** feste oder flüssige Farbstoffe zum Gemisch von Ausgangsmaterialien zugesetzt werden.

13. Verfahren nach einem der Ansprüche 1 bis 12, **dadurch gekennzeichnet, dass** die mindestens eine Substanz aus der ersten Gruppe oder die mindestens eine Substanz aus der zweiten Gruppe auf mindestens 50 °C vorgewärmt wird.

14. Materialherstellungsverfahren, das für Spritzgießen, Extrudieren und/oder Thermoformen geeignet ist, **dadurch gekennzeichnet, dass** die Körner des durch die Behandlung nach einem der Ansprüche 1 bis 12 gebildeten Agglomerats der Behandlung wiederholt unterzogen werden.

## Revendications

1. Procédé de préparation d'une matière utilisable pour le moulage par injection, l'extrusion et/ou le thermoformage, dans lequel au moins un thermoplastique est mélangé avec une autre matière, **caractérisé par le fait qu'**un mélange de particules d'au moins une substance provenant du premier groupe, comprenant les thermoplastiques et les précurseurs de ceux-ci, ayant une dimension de particule de jusqu'à 10 mm, avec au moins une substance provenant du second groupe, comprenant les substances lignocellulosiques, ayant une dimension de particule de jusqu'à 35 mm, et les substances inorganiques ayant une dimension de particule de jusqu'à 15 mm est formé, dans lequel un rapport de matière sèche des substances du premier groupe à une matière sèche totale des substances du second groupe est de 0,1 à 3, dans lequel le rapport mutuel de matière sèche des substances lignocellulosiques et de matière sèche des substances inorganiques provenant du second groupe se situe dans la plage de 0 à 10, l'humidité entrante totale du mélange étant d'au plus 70 % du poids total du mélange ; le mélange est introduit conjointement avec un gaz propulseur dans une quantité de 0,4 m³ du gaz propulseur par kg du mélange à 1,5 m³ du gaz propulseur par kg du mélange au centre d'une zone de travail disposée entre deux plaques circulaires coaxiales à l'intérieur d'un intégrateur mécanique-thermique, qui sont munies de moyens d'impulsion de force mécanique aux particules du mélange, dans lequel les deux plaques circulaires de l'intégrateur mécanique-thermique tournent l'une contre l'autre, les moyens d'impulsion de force mécanique sur chaque plaque rotative heurtant au moins deux fois chaque particule du mélange, la première impulsion de force mécanique donnée aux particules étant effectuée par une collision de la particule avec les moyens d'impulsion de force mécanique se déplaçant à une vitesse d'au moins 40 m·s⁻¹, dans lequel chaque impulsion de force mécanique suivante sur les particules a lieu au moins à la même intensité d'impulsion de force mécanique par comparaison avec l'impulsion précédente, permettant ainsi de chauffer et au moins séparer les particules dans le mélange de la matière traitée, dans lequel les collisions entre des particules de substances provenant du premier groupe et celles provenant du second groupe fournissent une homogénéisation du mélange pour former un agglomérat à grains fins de particules du matière de mélange avec une teneur en humidité de jusqu'à 2 % en poids.

2. Procédé selon la revendication 1, **caractérisé par le fait que** l'application d'une impulsion de force mécanique aux particules est répétée par d'autres moyens d'impulsion de force mécanique se déplaçant à une vitesse d'au moins 40 m·s⁻¹ ou plus ou, par la suite, une pression du gaz propulseur avec le mélange de matière traitée est augmentée soudainement au moins deux fois, au maximum, cependant, 100x dans un intervalle de temps ne dépassant pas 0,005 s, puis elle diminue à nouveau.

3. Procédé selon l'une des revendications 1 ou 2, **caractérisé par le fait que** l'écoulement turbulent intense de particules du mélange de substances provenant des premier et second groupes est créé dans le gaz propulseur lors du traitement du mélange entre deux plaques circulaires de l'intégrateur mécanique-thermique à l'aide du mouvement rapide des moyens d'impulsion de force mécanique pour intensifier les collisions mutuelles.

4. Procédé selon l'une quelconque des revendications 1 à 3, **caractérisé par le fait qu'**au moins un phyllosilicate et/ou un mélange de celui-ci en tant que substance inorganique insoluble dans l'eau est ajouté au mélange dans une quantité de 1 % en poids à 40 % en poids, par rapport au poids total du mélange.

5. Procédé selon la revendication 4, **caractérisé par le fait que** de la montmorillonite et/ou un mélange de minéraux contenant au moins 40 % en poids de montmorillonite est ajouté en tant que phyllosilicate.

6. Procédé selon l'une quelconque des revendications 1 à 5, **caractérisé par le fait qu'**au moins une substance du groupe consistant en les amidons thermoplastiques, l'acide polylactique (PLA), le polyhydroxyalcanoate (PHA), le polyhydroxybutyrate (PHB), le polyhydroxybutyrate-valérate (PHBV), la polycaprolactone (PCL), le poly(succinate de butylène) (PBS), l'anhydride maléique (MAH), l'anhydride maléique greffé (MAH-g), les acides humiques non modifiés et chimiquement modifiés, ou les mélanges de ceux-ci, est ajoutée en tant que thermoplastique.

7. Procédé selon l'une quelconque des revendications 1 à 6, **caractérisé par le fait qu'**un mélange d'amidon non modifié et/ou de matière contenant au moins 30 % en poids d'amidon non modifié et d'eau et/ou de substances contenant une fraction OH et/ou de substances contenant une fraction COOH est ajouté au mélange de matières entrantes.

8. Procédé selon l'une quelconque des revendications 1 à 7, **caractérisé par le fait que** de l'eau est ajoutée au mélange de matières entrantes avant et/ou pendant leur traitement dans une quantité de jusqu'à 40 % en poids, par rapport au poids sec des matières traitées, pour contrôler la température de l'agglomérat sortant.

9. Procédé selon l'une quelconque des revendications 1 à 8, **caractérisé par le fait que** la granulométrie de l'agglomérat sortant est contrôlée par régulation d'une quantité du gaz propulseur entrant dans l'opération de traitement.

10. Procédé selon l'une quelconque des revendications 1 à 9, **caractérisé par le fait que** des additifs solides et/ou liquides provenant d'un groupe consistant en protéines, pectine et gluten et/ou leurs mélanges sont ajoutés au mélange de matières entrantes dans une quantité de 5 % en poids à 35 % en poids par rapport au poids du mélange.

11. Procédé selon l'une quelconque des revendications 1 à 10, **caractérisé par le fait qu'**une substance provenant d'un groupe consistant en métaux, oxydes, hydroxydes, sels organiques et/ou inorganiques de métaux alcalins et/ou de métaux alcalino-terreux et/ou d'Al, et le mélange et/ou la solution de celui-ci sont ajoutés au mélange de matières entrantes dans une quantité de 0,1 à 25 % en poids, par rapport au poids sec des matières entrantes, en tant que plastifiants.

12. Procédé selon l'une quelconque des revendications 1 à 11, **caractérisé par le fait que** des colorants solides ou liquides sont ajoutés au mélange de matières entrantes.

13. Procédé selon l'une quelconque des revendications 1 à 12, **caractérisé par le fait que** ladite au moins une substance provenant du premier groupe ou ladite au moins une substance provenant du second groupe est préchauffée à au moins 50 °C.

14. Procédé de préparation d'une matière utilisable pour le moulage par injection, l'extrusion et/ou le thermoformage, **caractérisé par le fait que** les grains de l'agglomérat formé par le traitement selon l'une quelconque des revendications 1 à 12 sont soumis de manière répétée audit traitement.
